# EUROPÄISCHE PATENTSCHRIFT

(11) **EP 1 434 811 B1**
(45) Veröffentlichungstag und Bekanntmachung des Hinweises auf die Patenterteilung: **24.03.2010**
(21) Anmeldenummer: 02782814.4
(22) Anmeldetag: 02.10.2002
(51) Int. Cl.: C08G 18/10, C08G 18/76, C09J 175/04

(54) **REAKTIVE POLYURETHAN-ZUSAMMENSETZUNGEN MIT NIEDRIGEM RESTMONOMERGEHALT**
REACTIVE POLYURETHANE COMPOSITIONS WITH LOW RESIDUAL MONOMER CONTENT
COMPOSITIONS POLYURETHANE REACTIVES A FAIBLE TENEUR EN MONOMERES RESIDUELS

(30) Priorität: 13.10.2001 DE 10150722
(43) Veröffentlichungstag der Anmeldung: 07.07.2004
(73) Patentinhaber: Henkel AG & Co. KGaA, 40589 Düsseldorf (DE)
(72) Erfinder: KREBS, Michael, 40724 Hilden (DE); BROSA, Katja, 41469 Neuss (DE); BRENGER, Andreas, 40221 Düsseldorf (DE); FRANKEN, Uwe, 41542 Dormagen (DE); LOHR, Christoph, 40822 Mettmann (DE)
(86) Internationale Anmeldenummer: PCT/EP2002/011044
(87) Internationale Veröffentlichungsnummer: WO 2003/033562

(56) Entgegenhaltungen:
- EP-A- 0 211 235
- EP-A- 0 448 825
- EP-A- 0 693 511
- WO-A-93/09158
- WO-A-03/006521

## Beschreibung

Die vorliegende Erfindung betrifft bei Raumtemperatur feste Zusammensetzungen auf der Basis von Polyolen und 2,4'-Diphenylmethandiisocyanat mit einem niedrigen Gehalt an monomerem Diisocyanat, sowie deren Herstellung und deren Verwendung als Bindemittel für reaktive einkomponentige Schmelzklebstoffe oder lösungsmittelhaltige Polyurethanklebstoffe.

Reaktive Polyurethan- Kleb- und -Dichtstoffe auf der Basis von Prepolymeren mit freien Isocyanatgruppen zeichnen sich durch ein sehr hohes Leistungsprofil aus. Daher konnten in den letzten Jahren zunehmend neue Anwendungen für diese Kleb-/Dichtstoffe erschlossen werden. Zusammensetzungen für derartige Klebstoffe und/oder Dichtstoffe sind bereits aus sehr vielen Patentanmeldungen und sonstigen Veröffentlichungen bekannt. Hierzu zählen insbesondere auch reaktive, einkomponentige, feuchtigkeitshärtende Polyurethan-Schmelzklebstoffe.

Diese sind bei Raumtemperatur fest und werden in Form ihrer Schmelze als Klebstoff appliziert, die polymeren Bestandteile der Polyurethan-Schmelzklebstoffe enthalten Urethangruppen sowie reaktionsfähige Isocyanatgruppen. Durch das Abkühlen dieser Schmelze nach dem Auftrag und Fügen der zu verbindenden Substrat-Teile erfolgt zunächst eine rasche physikalische Abbindung des Schmelzklebstoffes durch dessen Erstarren. Daran schließt sich eine chemische Reaktion der noch vorhandenen Isocyanatgruppen mit Feuchtigkeit aus der Umgebung zu einem vernetzten unschmelzbaren Klebstoff an. Reaktive Schmelzklebstoffe auf der Basis von Isocyanat-terminierten Polyurethanprepolymeren sind z.B. bei H.F. Huber und H. Müller in "Shaping Reactive Hotmelts Using LMW Copolyesters", Adhesives Age, November 1987, Seite 32 bis 35 beschrieben.

Kaschierklebstoffe können entweder ähnlich aufgebaut sein wie die reaktiven Schmelzklebstoffe oder sie werden als einkomponentige Systeme aus der Lösung in organischen Lösungsmitteln appliziert. Eine weitere Ausführungsform besteht aus zweikomponentigen lösungsmittelhaltigen oder lösungsmittelfreien Systemen, bei denen die polymeren Bestandteile der einen Komponente Urethangruppen sowie reaktionsfähige Isocyanatgruppen enthalten und die zweite Komponente Polymere bzw. Oligomere mit Hydroxylgruppen, Aminogruppen, Epoxigruppen und/oder Carboxylgruppen enthält. Bei diesen zweikomponentigen Systemen werden die Isocyanat-gruppenhaltige Komponente und die zweite Komponente unmittelbar vor der Applikation gemischt, im Normalfall mit Hilfe eines Misch- und Dosiersystems.

Neben vielen Vorteilen weisen diese Polyurethan-Zusammensetzungen auch einige systembedingte Nachteile auf. Einer der gravierendsten Nachteile ist der Restgehalt an monomeren Isocyanaten, insbesondere bei den der flüchtigeren Diisocyanaten. Kleb-/Dichtstoffe und insbesondere die Schmelzklebstoffe werden bei erhöhter Temperatur verarbeitet. Die Schmelzklebstoffe werden beispielsweise zwischen 100°C und 200°C verarbeitet, Kaschierklebstoffe zwischen Raumtemperatur und 150°C. Schon bei Raumtemperatur weisen flüchtige Isocyanate wie TDI oder IPDI einen nicht zu vernachlässigenden Dampfdruck auf. Dieser merkliche Dampfdruck ist insbesondere bei einem Sprühauftrag besonders gravierend, da hierbei signifikante Mengen an Isocyanatdämpfen über dem Applikationsobjekt auftreten können, die wegen ihrer reizenden und sensibilisierenden Wirkung toxisch sind. Daher müssen Schutzmaßnahmen zur Verhütung von Gesundheitsschäden für die mit der Verarbeitung beauftragten Personen ergriffen werden. Diese Maßnahmen, wie z.B. die Überwachungspflicht der Einhaltung der maximalen Arbeitsplatzkonzentration sind aufwendig. Insbesondere Absaugungsmaßnahmen der Dämpfe an der Entstehungs- und Austrittsstelle sind sehr kostenintensiv und behindern zudem einige Auftragsverfahren, wie insbesondere den Sprühauftrag der reaktiven Polyurethan-Kleb-/Dichtstoffe.

Für die genannten Anwendungsfelder ist daher die Entwicklung von reaktiven Polyurethan-Zusammensetzungen mit einem drastisch reduzierten Anteil an monomeren Diisocyanaten in hohem Maße wünschenswert, da letztere zum Teil erst deren Einsatz bei vielen Applikationen ermöglicht, bei denen der Einsatz aus den oben erläuterten arbeitshygienischen Problemen bisher nicht möglich war.

Nach der Schulz-Flory-Statistik ist bei der Umsetzung von Diisocyanaten mit Isocyanatgruppen etwa gleicher Reaktivität mit hydroxylgruppenhaltigen Verbindungen der verbleibende Gehalt an monomerem Diisocyanat im Reaktionsprodukt vom NCO/OH-Verhältnis der Reaktanden bei der Prepolymer-Synthese abhängig. Bei einem NCO/OH-Verhältnis von 2, wie es häufig für die Prepolymerzusammensetzung notwendig ist, verbleiben etwa 25% des eingesetzten monomeren Diisocyanates als Monomer im Prepolymer. Werden bei einer Prepolymer-Synthese z.B. 10 Gew.% Diphenylmethan-diisocyanat (MDI) bei einem NCO/OH-Verhältnis von 2 eingesetzt, so findet man in Übereinstimmung mit der oben genannten statistischen Abschätzung größenordnungsmäßig etwa 2 Gew.% monomeres MDI im Prepolymeren. Bei 150°C hat das reine MDI bereits einen Dampfdruck von 0,8 mbar, in Zusammensetzungen ist dieser Dampfdruck zwar nach Maßgabe des Raoult'schen Gesetzes niedriger, er ist aber immer noch oberhalb des arbeitshygienisch unbedenklichen Bereiches. Unter den oben beschriebenen Applikationsbedingungen, insbesondere bei einer großflächigen Applikation als Schmelzklebstoff in dünner Schicht, gelangen also erhebliche Mengen des Restmonomers in den darüber liegenden Luftraum und müssen durch Absaugung entfernt werden. Eine signifikante Absenkung des Monomergehaltes um eine Zehnerpotenz durch Verringerung des NCO/OH-Verhältnisses ist in der Praxis in aller Regel nicht durchführbar, weil das durchschnittliche Molekulargewicht dann exponentiell ansteigen würde und die daraus resultierenden Polyurethan-Zusammensetzungen extrem hochviskos würden und nicht mehr zu verarbeiten wären. In der Praxis geht man daher bei der Prepolymer-Synthese auch andere Wege. So wird beispielsweise mit einem ausreichend hohen NCO/OH-Verhältnis synthetisiert und das monomere Diisocyanat nach der Prepolymerisierung in einem zweiten Schritt entfernt, dies kann beispielsweise durch Abdestillieren des nicht umgesetzten monomeren Diisocyanates im Vakuum geschehen oder durch nachträgliche chemische Bindung des monomeren Diisocyanates. So beschreibt die EP-A-316738 ein Verfahren zur Herstellung von Urethangruppen aufweisenden Polyisocyanaten mit einem Urethangruppen-freien Ausgangs-Diisocyanat von maximal 0,4 Gew.% durch Umsetzung von aromatischen Diisocyanaten mit mehrwertigen Alkoholen und anschließender Entfernung des nicht umgesetzten, überschüssigen Ausgangs-Diisocyanats, wobei die destillative Entfernung des überschüssigen Ausgangs-DÜsocyanats in Gegenwart eines Isocyanatgruppen aufweisenden aliphatischen Polyisocyanats durchgeführt wird.

Gemäß der Lehre der DE 10013186 kann das destillative Entfernen der monomeren Isocyanate dadurch vermieden werden, daß in einer ersten Stufe ein Additionsprodukt aus Verbindungen mit zwei isocyanatreaktiven Gruppen mit einem Diisocyanat I umgesetzt wird, wobei entweder das Diisocyanat oder die isocyanatreaktive Verbindung reaktive Gruppen mit unterschiedlicher Reaktivität aufweist. Dabei werden die Verhältnisse von Diisocyanat und isocyanatreaktiver Verbindung equimolar eingestellt, so daß das resultierende Additionsprodukt eine mit Isocyanat reaktive Gruppe und eine freie NCO-Gruppe enthält. Ggf. soll sich eine intermolekulare Additionsreaktion dieses Reaktionsproduktes zu einem Polyadditionsprodukt anschließen, das wiederum eine isocyanatreaktive Gruppe und eine Isocyanatgruppe enthält. Daran schließt sich die Umsetzung mit einem weiteren Diisocyanat II an, das von dem vorgenannten Diisocyanat I verschieden ist.

Die EP-A-0393903 beschreibt ein Verfahren zur Herstellung von Prepolymeren, bei dem in einem ersten Schritt monomeres Diisocyanat mit einem Polyol umgesetzt wird. Anschließend wird ein Katalysator in ausreichender Menge zugegeben, so daß ein erheblicher Teil der restlichen Isocyanat-Funktionalität in Allophanat-Funktionalität übergeführt wird. Nach Erreichen des theoretischen NCO-Gehaltes wird die Reaktion durch rasches Abkühlen und Zusatz von Salicylsäure abgestoppt.

Die WO-96/06124 beschreibt Polyurethan-Zusammensetzungen mit einem niedrigen Anteil an monomeren Diisocyanaten, die durch Umsetzung von Polyolen mit trifunktionellen Isocyanaten und ggf. Zusatz von monofunktionellen Kettenabbrechern hergestellt werden. Nachteilig bei diesem Verfahren ist die geringe Verfügbarkeit von trifunktionellen, niedermolekularen Isocyanaten, insbesondere die trifunktionellen Homologen des Diphenylmethan-diisocyanates sind kommerziell in reiner Form nicht erhältlich.

Gemäß der Lehre der WO 01/40342 können Polyurethan - Zusammensetzungen mit einem niedrigen Gehalt an monomeren Diisocyanaten in einem zweistufigen Verfahren hergestellt werden, wobei in einem ersten Schritt eine Diolkomponente mit einem Molekulargewicht kleiner 2000 mit einem monomeren Diisocyanat mit einem Molekulargewicht kleiner als 500 umgesetzt wird. Aus diesem Umsetzungsprodukt wird das nicht umgesetzte monomere Diisocyanat entfernt und in einem zweiten Schritt wird das so entstanden hochmolekulare, monomerarme Diisocyanat mit einem Polyol umgesetzt, so daß ein reaktives Prepolymer mit Isocyanat- Endgruppen entsteht. Gemäß dieser Schrift eignen sich derartige Polyurethan-Zusammensetzungen zur Verwendung als Bindemittel für reaktive Ein- oder zweikomponentige Kleb- / Dichtstoffe, die ggf. lösungsmittelhaltig sein können, weiterhin sollen sich diese Zusammensetzungen bei entsprechender Auswahl der Polyole zur Herstellung von reaktiven Schmelzklebstoffen eignen.

Die noch unveröffentlichte DE 101 32571.1 schlägt zur Herstellung von reaktiven Polyurethanen mit einem geringen Gehalt von monomeren Isocyanaten vor, mindestens ein monomeres, asymmetrisches Diisocyanat mit einem Molekulargewicht von 160 g/mol bis 500 g/mol mit mindestens einem Diol mit einem Molekulargewicht von 50 g/mol bis 2 000 g/mol umzusetzen. Durch die hohe Selektivität der Reaktion sind keine zusätzlichen Aufarbeitungs- und Reinigungsschritte zur Entfernung des überschüssigen Monomers nötig. Diese Umsetzungsprodukte können in einer zweiten Stufe direkt mit höhermolekularen Polyolen zum Endprodukt umgesetzt werden.

Obwohl die Produkte, die nach der Lehre der beiden letztgenannten Schriften herstellbar sind, sehr gute Verarbeitungseigenschaften und einen niedrigen Gehalt an monomeren Diisocyanaten aufweisen, ist es wünschenswert, die Herstellverfahren für monomerenarme reaktive Polyurethanzusammensetzungen weiter zu vereinfachen. Hierzu gehören einfache Reaktionsführung, möglichst niedrige Viskosität des Reaktionsproduktes sowie gute Schmelzstabilität der reaktiven Polyurethan - Zusammensetzung.

Die EP 693511 A1 beschreibt Isocyanatgruppen enthaltende reaktive Hotmelt Systeme. Diese Zusammensetzungen sind Reaktionsprodukte von Hydroxypolyolen mit Ester und / oder Ethergruppierungen der Hydroxylzahl von 15 bis 150 mit einer mittleren Funktionalität von 1,95 bis 2,2 mit Diphenylmethandiisocyanaten in einem Verhältnis von Isocyanatgruppen in den Diphenylmethandiisocyanaten zu Hydroxylgruppen in den Polyolen von 1,4:1 bis 2,5:1, wobei das Diphenylmethandüsocyanat (MDI) einen Gehalt von mindestens 70 Gew. % an 2,4'-Diphenylmethandiisocyanat aufweist. Gemäß der Lehre dieser Schrift weisen diese Umsetzungsprodukte eine niedrige Anfangsviskosität und eine erhöhte Temperaturstabilität (Schmelzstabilität) auf, so daß sie sich als Fest-Klebstoffe für die verschiedensten Einsatzgebiete eignen sollen. Angaben über den Rest-Gehalt an monomeren Diisocyanaten dieser Produkte werden in der Schrift nicht gemacht.

Trotz des vorgenannten Standes der Technik besteht also weiterhin Bedarf an verbesserten Polyurethan-Zusammensetzungen mit einem niedrigen Anteil an monomeren Diisocyanaten, die sich für den Einsatz als Kleb-/Dichtstoffe, insbesondere für reaktive Schmelzklebstoffe eignen. Dabei sollen insbesondere die eingesetzten Rohstoffe leicht und kostengünstig zugänglich sein und sich leicht umsetzen lassen und das Haftverhalten dem der konventionellen Schmelzklebstoffe zumindest ebenbürtig sein. Die Erfinder haben sich daher die Aufgabe gestellt, Polyurethan-Zusammensetzungen bereitzustellen, die die letztgenannten Probleme lösen können.

Die erfindungsgemäße Lösung der Aufgabe ist den Patentansprüchen zu entnehmen. Sie besteht im Wesentlichen in der Bereitstellung von bei Raumtemperatur festen reaktiven Polyurethan - Klebstoffzusammensetzungen mit einem Erweichungspunkt oberhalb von 23°C (Ring und Ball Methode), mit einem maximalen Gehalt an monomeren Diisocyanat von weniger als 0,5 Gew.-%, enthaltend mindestens ein Umsetzungsprodukt mit freien Isocyanatgruppen aus
- 2,4'-Diphenylmethandiisocyanat mit einem Anteil an 2,4'-Isomeren von mindestens 95 Gew.%, vorzugsweise mindestens 97,5 Gew.% und
- mindestens einem Polyetherpolyol und/oder Polyalkylendiol mit einem Molekulargewicht unter 1000 und/oder einem kristallinen, teilkristallinen oder glasartig amorphen Polyesterpolyol, und
- zusätzlich einen Gehalt an migrationsfähigen, haftungsverstärkenden Polyisocyanaten mit einem Dampfdruck kleiner als 10⁻⁸ hPa bei 20°C von kleiner als 30 Gew.%, ausgewählt aus Thiophosphor-säure-tris-(p-Isocyanato-Phenylester), Triphenylmethan-4,4',4"-Triisocyanat, isomere trifunktionelle Homologen des Diphenylmethandüsocyanats (MDI), Isocyanato-bis- ((4-Isocyanatophenyl)methyl)-benzol, 2-Isocyanato-4-((3-. Isocyanatophenyl)-methyl)-1-((4-Isocyanatophenyl)methyl)benzol, 4-Isocyanato-1,2-bis((4-Isocyanatophenyl)methyl)-benzol, 1-Isocyanato4-((2-Isocyanatophenyl)methyl)-2-((3-Isocyanatophenyl)methyl)benzol, 4-Isocyanato-α-1-(o-Isocyanatophenyl)-α-3(p-Isocyanatophenyl)-m-Xylol, 2-Isocyanato(o-Isocyanatophenyl)-α'(p-Isocyanatophenyl)m-Xylol, 2-Isocyanato-1,3-bis((2-Isocyanatophenyl) methyl)-benzol, 2-Isocyanato-1,4-bis((4-Isocyanatophenyl)methyl)-benzol, Isocyanato-bis-((Isocyanatophenyl)methyl)-benzol, 1-Isocyanato-2,4-bis((4-Isocyanatophenyl)-methyl)-benzol, das Biuretisierungsprodukt des Hexamethylendiisocyanates (HDI), das Isocyanuratisierungsprodukt des HDI, die Trimerisierungsprodukte des Isophorandüsocyanats (IPDI), Addukte aus Diisocyanaten und niedermolekularen Diolen und/oder Triolen, sowie Addukte aus aromatischen Diisocyanaten und Triolen.

"Bei Raumtemperatur fest" im Sinne dieser Erfindung bedeutet dabei, daß die Zusammensetzung kristallin, teilkristallin und/oder glasartig amorph ist und einen Erweichungspunkt oberhalb von 23° C (nach der Ring and Ball Methode) aufweist.

In den bevorzugten Ausführungsformen beträgt dabei der Anteil an 2,2'-Isomeren des eingesetzten MDI weniger als 0,3 Gew. % des eingesetzten Diisocyanates, besonders bevorzugt enthält die Diisocyanat - Zusammensetzung weniger als 0,1 Gew. % und besonders bevorzugt weniger als 0,06 Gew. % des 2,2'-Isomeren des MDI.

Als Polyole kommen dabei Polyetherpolyole, Polyalkylendlole und /oder kristalline, teilkristalline oder glasartig amorphe Polyesterpolyole sowie ggf. flüssige Polyesterpolyole zum Einsatz. Damit bei Raumtemperatur feste Zusammensetzungen entstehen, sollte die Polyolkomponente mindestens ein Polyetherpolyol oder ein Polyalkylendiol mit einem Molekulargewicht unter 1 000 oder ein kristallines, teilkristallines oder glasartig amorphes Polyesterpolyol oder eine Mischung dieser drei Polyoltypen enthalten. Weiterhin kann die Zusammensetzung ein Reaktionsprodukt aus 2,4'-MDI und bei Raumtemperatur flüssigen Polyesterpolyolen oder Polyetherpolyolen enthalten, die ein Molekulargewicht über 1000 aufweisen.

Als Polyetherpolyole finden dabei die an sich bekannte Polypropylenglycole oder Polybutylenglycole, Verwendung. Beispiele sind di- und/oder trifunktionelle Polypropylenglycole mit zwei bzw. drei Hydroxylgruppen pro Molekül im Molekulargewichts-Bereich von 400 bis 20000, vorzugsweise im Bereich von 1000 bis 6000. Es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole (Polybutylenglycole, Poly(oxytetramethylen)glycol, Poly-THF), die z.B. durch die saure Polymerisation von Tetrahydrofuran hergestellt werden, dabei liegt der Molekulargewichts-Bereich der Polytetramethylenglykole zwischen 600 und 6000, vorzugsweise im Bereich von 800 bis 5000.

Es können z.B. zwei Polyetherpolyole verwendet werden, wobei ein Polyetherpolyol ein mittleres Molekulargewicht oberhalb von 1000 aufweist und ein Polyetherpolyol ein mittleres Molekulargewicht unter 1000 aufweist, der Vorzugsbereich des Molekulargewichtes für das letztere ist 400 bis 800. Anstelle der Polyetherpolyole, insbesondere der niedermolekularen Polyole, können auch Alkylendiole wie z.B. Butandiol, Hexandiol, Octandiol, Decandiol oder Dodecandiol verwendet werden.

Als Polyesterpolyole sind die kristallinen oder teilkristallinen Polyester geeignet, die durch Kondensation von Di- bzw. Tricarbonsäuren, wie z.B. Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Trimethylolpropan oder deren Mischungen hergestellt werden können.

Eine weitere Gruppe der erfindungsgemäß einzusetzenden Polyole sind die Polyester auf der Basis von ε-Caprolacton, auch "Polycaprolactone" genannt.

Es können aber auch Polyesterpolyole oleochemischer Herkunft mitverwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate.

Die Molekulargewichtsangaben der vorgenannten Polyetherpolyole bzw. Polyesterpolyole sind zahlenmittlere Molekulargewichte, die in der Regel durch Berechnung aus der Hydroxylzahl ermittelt werden.

Weiterhin können die erfindungsgemäßen Zusammensetzungen niedermolekulare Polymere aus olefinisch ungesättigten Monomeren enthalten.

"Niedermolekulare Polymere aus olefinisch ungesättigten Monomeren" im Sinne dieser Erfindung sind Polymere hergestellt aus einem oder mehreren Comonomeren ausgewählt aus Acrylsäure, Methacrylsäure, C₁- bis C₁₀- Alkylestern der Acrylsäure, der Methacrylsäure, Ester der (Meth)acrylsäure von Glycolethern wie Methoxyethanol, Ethoxyethanol, Propoxyethanol und/oder Butoxyethanol, Vinylester, wie Vinylacetat, Vinylpropionat, Vinylester von hochverzweigten Monocarbonsäuren wie z.B. der Versaticsäure (Produkt der Shell Chemie), Vinylether, Fumarsäureester, Maleinsäureester, Styrol, Alkylstyrole, Butadien oder Acrylnitril sowie deren Mischungen.

In einer bevorzugten Ausführungsform haben diese niedermolekularen Polymeren aktive Wasserstoffgruppen in Form von Hydroxylgruppen, primären oder sekundären Aminogruppen, so daß diese niedermolekularen Polymeren in die Polymermatrix des Schmelzklebstoffes chemisch mit eingebunden werden können. Üblicherweise werden die niedermolekularen Polymere durch radikalische Polymerisation bzw. Copolymerisation der vorgenannten Monomeren hergestellt. Zum Einbau der aktiven Wasserstoffgruppen können Hydroxyethyl(meth)acrylat, Hydroxypropyl(meth)acrylat, Hydroxybutyl(meth)acrylat oder Ester der Acrylsäure oder Methacrylsäure mit Glycololigomeren oder Polymeren wie z.B. Di-, Tri-, Tetra- und/oder Polyethylenglycol mit den oben genannten Monomeren copolymerisiert werden. Außerdem lassen sich die funktionellen Gruppen durch Verwendung von OH- oder aminofunktionellen Initiatoren und Reglern (Kettenüberträgern) erzeugen. Anstelle der vorgenannten hydroxyfunktionellen (Meth)acrylate können auch die korrespondierenden aminofunktionellen Comonomeren mitverwendet werden. Der Molekulargewichtsbereich der niedermolekularen Polymeren aus olefinisch ungesättigten Monomeren liegt zwischen 10 000 und 150 000 Dalton, vorzugsweise 20 000 und 80 000 Dalton. Dabei wird das mittlere Molekulargewicht, wie bei radikalischen Copolymerisaten üblich, durch eine Standard - Gelpermeationschromatographie (GPC) bestimmt, letztere wird gelegentlich auch "Size Exclusion Chromatography" (SEC) genannt. Hierzu wird das mittlere Molekulargewicht gegen einen externen Polystyrolstandard mit zertifiziertem Molekulargewicht kalibriert.

Bei Verwendung der OH-funktionellen Polymeren sollen diese eine OH-Zahl (DIN 53783) von 0,5 bis 20, vorzugsweise zwischen 1 und 15 aufweisen. Besonders geeignete niedermolekulare Polymere mit aktiven Wasserstoffgruppen werden in der WO 99/28363 auf Seite 13 bis 14 offenbart.

Eine bevorzugte Anwendung für die erfindungsgemäßen bei Raumtemperatur festen Polyurethan - Zusammensetzungen sind die reaktiven, einkomponentig feuchtigkeitshärtenden Schmelzklebstoffe. Diese Schmelzklebstoff-Zusammensetzungen können zusätzlich klebrigmachende Harze, haftvermittelnde Zusätze, Füllstoffe, Pigmente, Weichmacher, Stabilisatoren und / oder Katalysatoren oder deren Mischungen sowie weitere übliche Hilfs- und Zusatzstoffe enthalten.

Als klebrigmachende Harze können z.B. Abietinsäure, Abietinsäureester, Terpenharze, Terpenphenolharze, phenolmodifizierte Styrolpolymere, phenolmodifizierte α-Methylstyrolpolymere oder Kohlenwasserstoffharze Verwendung finden. In bevorzugter Ausführungsform können diese klebrigmachenden Harze aktive Wasserstoffatome enthalten, so daß diese bei der Umsetzung mit den Di- oder Polyisocyanaten mit in die Bindemittelmatrix des Schmelzklebstoffes eingebaut werden. Konkrete Beispiele hierfür sind hydroxyfunktionelle Ester der Abietinsäure oder auch hydroxylierte Terpenphenolharze.

Als haftvermittelnde oder hanungsverstärkende Zusätze werden Polyisocyanate mit einem Dampfdruck kleiner als 10⁻⁶ hPa bei 20° C eingesetzt.

Migrationsfähige, haftungsverstärkende Polyisocyanate gemäß dieser Erfindung werden dabei ausgewählt aus Thiophosphor-säure-tris-(p-Isocyanato-Phenylester), Triphenylmethan-4,4',4"-Triisocyanat, isomere trifunktionelle Homologen des Diphenylmethandiisocyanats (MDI) insbesondere Isocyanato-bis-((4-Isocyanatophenyl)methyl)-benzol, 2-Isocyanato-4-((3-Isocyanatophenyl)-methyl)-1-((4-Isocyanatophenyl)methyl)-benzol, 4-Iso-cyanato-1,2-bis((4-Isocyanatophenyl)methyl)-benzol, 1-Isocyanato-4-((2-Isocyanatophenyl)methyl)-2-((3-Isocyanatophenyl)methyl)benzol, 4-Isocyanato-α-1-(o-Isocyanatophenyl)-α-3(p-Isocyanatophenyl)-m-Xylol, 2-Isocyanato(o-Isocyanatophenyl)-α'(p-Isocyanatophenyl)m-Xylol, 2-Isocyanato-1,3-bis((2-Isocyanatophenyl)methyl)-benzol, 2-Isocyanato-1,4-bis((4-Isocyanatophenyl)methyl)-benzol, Isocyanato-bis((Isocyanatophenyl)methyl)-benzol, 1-Isocyanato-2,4-bis((4-Isocyanatophenyl)-methyl)-benzol, das Biuretisierungsprodukt des Hexamethylendiisocyanates (HDI), das Isocyanuratisierungsprodukt des HDI, die Trimerisierungsprodukte des Isophorondiisocyanats (IPDI), sowie Addukte aus Diisocyanaten und niedermolekularen Diolen und/oder Triolen, insbesondere die Addukte aus aromatischen Diisocyanaten und Triolen, besonders eignen sich z.B. Addukte des 2,4'-Diphenylmethandiisocyanates an ein Diol mit einem Molekulargewicht kleiner als 2000 oder an Polyole mit einer Funktionalität kleiner als 3,3 wie z.B. Trimethylolpropan oder Glycerin. Dabei soll der Gehalt des Adduktes an monomerem Diisocyanat kleiner als 2 Gew.%, vorzugsweise kleiner als 1 Gew.% sein. Es können auch Mischungen der vorgenannten Polyisocyanate und/oder Addukte als migrationsfähige, haftungsverstärkende oder haftungsvermittelnde Zusätze verwendet werden.

Beispiele für migrationsfähige, haftvermittelnde bzw. haftungsverstärkende organofunktionelle Silane sind das 3-Isocyanatopropyltriethoxysilan, das 3-Isocyanatopropyltrimethoxysilan, 3-(2,3-epoxypropoxy)propyltrimethoxysilan, 3-(2,3-epoxypropoxy)propyltriethoxysilan, 3-(2,3-epoxypropoxy)propyldiethoxymethylsilan, 3-(2,3-epoxypropoxy)propylethoxydimethylsilan, 3-Mercaptopropyltrimethoxysilan, 3-Mercaptopropyltriethoxysilan, 3-Mercaptopropyldiethoxymethylsilan, 3-Mercaptopropylethoxydimethylsilan sowie Mischungen der vorgenannten Silane. Die Menge der haftungsvermittelnden oder haftungsverstärkenden Zusätze richtet sich dabei nach den zu verklebenden Substraten sowie nach der Migrationsfähigkeit und Reaktionsfähigkeit des Zusatzes. Die migrationsfähigen haftungsverstärkenden Polyisocyanate werden üblicherweise in Mengen von weniger als 30 Gew. %, vorzugsweise weniger als 10 Gew. % der Gesamtzusammensetzung eingesetzt, die haftungsvermittelnden organofunktionellen Silane werden vorzugsweise in Mengen kleiner als 5, besonders bevorzugt kleiner als 2 Gew. % eingesetzt.

Als "Stabilisatoren" im Sinne dieser Erfindung sind einerseits Stabilisatoren zu verstehen, die eine Viskositätsstabilität des Polyurethanprepolymeren während der Herstellung, Lagerung bzw. Applikation bewirken. Hierfür sind z.B. monofunktionelle Carbonsäurechloride, monofunktionelle hochreaktive Isocyanate, aber auch nicht-korrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des ausgehärteten Produktes. Wenn das Polyurethanprepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").

Bestehen wesentliche Bestandteile des Polyurethanprepolymers aus Polyesterbausteinen, können Hydrolyse-Stabilisatoren, z.B. vom Carbodiimid-Typ, eingesetzt werden.

Ggf. enthaltende Katalysatoren können in an sich bekannter Weise die Bildung des Polyurethan - Prepolymeren bei seiner Herstellung und / oder die Feuchtigkeitsvernetzung nach der Applikation des Klebstoffes beschleunigen. Als erfindungsgemäß einsetzbare Katalysatoren eignen sich dabei insbesondere die in der vorgenannten WO01/40342 auf Seite 11 bis 13 genannten zinnorganischen und / oder aminischen Katalysatoren in den dort angegebenen Mengen.

Vorzugsweise beträgt bei der Herstellung der erfindungsgemäßen Zusammensetzungen das NCO- zu OH-Verhältnis des eingesetzten 2,4'-Diphenylmethandüsocyanates zur Summe der Polyole 1,1 bis 1,9, besonders bevorzugt 1,2 bis 1,75, wobei die Reaktionstemperatur 160° C, vorzugsweise 130° C, besonders bevorzugt 110° C nicht übersteigt. Durch eine derartige Herstellungsweise wird gewährleistet, daß die Selektivität der Isocyanatgruppen voll ausgeschöpft wird, so daß Zusammensetzungen entstehen, die einen max. Gehalt an monomerem Diisocyanat von weniger als 0,5 Gew. %, vorzugsweise weniger als 0,25 Gew. % aufweisen.

In der Regel werden die haftungsvermittelnden oder haftungsverstärkenden Zusätze und die weiteren Hilfs- und Zusatzstoffe nach der Umsetzung der Polyole mit dem 2,4'-MDI der Prepolymer-Mischung zugesetzt.

Die erfindungsgemäßen Polyurethan - Zusammensetzungen eignen sich insbesondere zur Verwendung als Schmelzklebstoff, sie können jedoch prinzipiell auch als Reaktivkomponente für zweikomponentige oder lösungsmittelhaltige Klebstoffe verwendet werden.

Die erfindungsgemäßen Polyurethanschmelzklebstoffe können Umsetzungsprodukte aus
- 5 bis 15 Gew. %, vorzugsweise 8 bis 12 Gew. % 2,4'-Diphenylmethandiisocyanat mit,
- 20 bis 40 Gew. %, vorzugsweise 25 bis 40 Gew. % eines difunktionellen Polypropylenglycols mit einem Molekulargewicht zwischen 2000 und 6000, und/oder
- 2 bis 8 Gew. % eines Polypropylenglycols oder Alkylendiols mit einem Molekulargewicht zwischen 200 und 600 und/oder
- 15 bis 30 Gew. %, vorzugsweise 20 bis 25 Gew. % eines kristallinen, teilkristallinen oder glasartig amorphen Polyesterpolyols und/oder
- 0 bis 35 Gew. %, vorzugsweise 15 bis 30 Gew. % eines niedermolekularen Polymeren aus olefinisch ungesättigten Monomeren, vorzugsweise mit Hydroxylgruppen und/oder
- 0 bis 8 Gew. % eines vorzugsweise hydroxylierten klebrigmachenden Harzes sowie Zusätze von
- weniger als 30 Gew.%, vorzugsweise weniger als 10 Gew.% eines migrationsfähigen, haftungsverstärkenden Polyisocyanates und/oder 0 bis 5 Gew.% eines organofunktionellen Silans,
- 0,01 bis 0,1 Gew. % eines sauren Stabilisators der vorgenannten Art
- sowie ggf. weitere Hilfs- und Zusatzstoffe enthalten.

Dabei beträgt die Summe der vorgenannten Bestandteile 100 Gew. %.

Prinzipiell können die vorgenannten reaktiven Produkte separat durch Umsetzung mit dem Diisocyanat hergestellt werden, anschließend können die so hergestellten separat isocyanatfunktionellen Reaktanden in der gewünschten Menge abgemischt werden. Vorzugsweise werden die Polyole jedoch in einer "EintopfReaktion" mit dem 2,4'-MDI umgesetzt. Weitere Möglichkeiten der Herstellung sind in der WO 99/28363 auf Seite 16 und Seite 17 offenbart.

Nachfolgend soll die Erfindung an Hand einiger Prinzipversuche dargestellt werden, wobei die Auswahl der Beispiele keine Beschränkung des Umfanges des Erfindungsgegenstandes darstellen soll. Sie zeigen nur modellhaft die Wirkungsweise der erfindungsgemäß herzustellenden Schmelzklebstoffe und ihre Vorteile in Bezug auf niedrigen Restmonomergehalt, Haftungsverhalten sowie niedrige Viskosität und Schmelzstabilität. Derartige Schmelzklebstoffe können für eine Vielzahl von Verklebungs- Anwendungen eingesetzt werden. Ihr Auftrag erfolgt in konventioneller Weise im Sprühauftrag, mit Hilfe von Auftragswalzen, Rakeln und dergleichen.

In den nachfolgenden Beispielen sind alle Mengenangaben, Gewichtsprozente bzw. Gewichtsteile, wenn nicht angegeben.

### Beispiele

In den nachfolgenden Vergleichsbeispielen wurde handelsübliches reines 4,4'-MDI zum einen mit normalen Isocyanatkennzahlen (NCO/OH-Verhältnissen) zu einem Schmelzklebstoff umgesetzt, wie er handelsüblich ist und dem Stand der Technik entspricht.

Im Vergleichsbeispiel 2 wurde zur Erzielung eines niedrigeren Restmonomergehaltes die Isocyanatkennzahl herabgesetzt.

Im erfindungsgemäßen Beispiel wurde an Stelle des 4,4'- MDI ein reines 2,4'-MDI mit einer Reinheit von 97,5 % an 2,4'-Isomeren eingesetzt.

### Vergleichsbeispiel 1

100 Teile eines Gemisches aus kristallinen, amorphen und flüssigen Polyesterdiolen mit einer mittleren OHZ von 38,4 wurden bei 100°C mit 17,1 Teilen 4,4'-MDI umgesetzt, dies entspricht einem NCO/OH-Verhättnis von 2,0 : 1.

### Vergleichsbeispiel 2

100 Teile eines Gemisches aus kristallinen, amorphen und flüssigen Polyesterdiolen mit einer mittleren OHZ von 38,4 wurden bei 100°C mit 13,7 Teilen 4,4'-MDI umgesetzt, dies.entspricht einem NCO/OH-Verhättnis von 1,60 : 1.

### Erfindungsgemäßes Beispiel

100 Teile der in Vergleichsbeispiel 1 beschriebenen Polyestermischung wurden bei 100°C mit 13,7 Teilen 2,4'-MDI umgesetzt, dies entspricht einem NCO/OH-Verhältnis von 1,60 : 1

| | Vergleich 2 | Vergleich 1 | Erfindungsgemäßes Umsetzungsprodukt |
|---|---|---|---|
| **Viskosität bei 130°C** | 18200 mPas | 7000 mPas | 6800 mPas |
| **Schmelzstabilität 16h/130°C im offenen Brookfield Viskosimeter** | Messung nach Anstieg um 500% nach 7h abgebrochen | Viskositätsanstieg um 345%. | Viskositätsanstieg um 113% |
| **Monomergehalt** | 1,2% MDI | 2,3% MDI | 0,2% MDI |
| **Freisetzung von MDI während der Verarbeitung nach DBA-Methode** | nicht bestimmt | 25 µg/m³ | 1,8 µg/m³ |
| **Haftung** | ausgezeichnet auf vielen Untergründen wie Holz, HPL, CPL, PVC, ABS, PC, PMMA | ausgezeichnet auf vielen Untergründen wie Holz, HPL, CPL, PVC, ABS, PC, PMMA | ausgezeichnet auf vielen Untergründen wie Holz, HPL, CPL, PVC, ABS, PC, PMMA |

Wie aus den vorstehenden Daten hervorgeht, wird bei einer Absenkung der Isocyanat - Kennzahl bei Verwendung von 4,4'-MDI zwar der Monomergehalt um etwa die Hälfte gesenkt, erkauft wird dies jedoch mit einem mehr als verdoppelten Anstieg der Schmelzviskosität bei 130 °C und einer stark eingeschränkten Schmelzstabilität.

Bei erfindungsgemäßen Verwendung eines hochreinen 2,4'-MDI wird selbst bei niedriger Isocyanatkennzahl eine Schmelzviskosität erzielt, wie sie dem Stand der Technik entspricht, der Viskositätsanstieg des erfindungsgemäßen Produktes ist deutlich geringer als bei den handelsüblichen Schmelzklebstoffen des Standes der Technik, d.h. diese erfindungsgemäßen Zusammensetzungen weisen eine sehr hohe Schmelzstabilität auf, was für die Verarbeitung auf Maschinen sehr wichtig ist. Gleichzeitig wird der Monomergehalt an nicht umgesetzten Monomeren MDI gegenüber dem Stand der Technik auf ein Zehntel reduziert.

Nachfolgend werden die für die Ermittlung der Freisetzung des MDI notwendigen Verarbeitungsparameter sowie die Probennahme und Analyse des Monomergehaltes in der Verarbeitungsumgebung ausführlicher beschrieben. Hierin bedeutet DBA - Methode die analytische Ermittlung des Isocyanatgehaltes nach der Dibutylamin-Methode.

### Verarbeitung

In einem Raum von 75 m³ wurden auf einem Tisch von 115 cm Höhe verschiedene Objekte mit dem angelieferten Schmelzklebstoff auf eine Keramikfliese geklebt. Der Raum wurde während der Verarbeitungs-Simulation weder technisch noch durch Fenster oder Türen belüftet.

Auf jede Keramikfliese wurden jeweils zwei Objekte aus Holz und zwei aus PVC geklebt. Insgesamt wurden 20 Fliesen beklebt, so dass insgesamt 80 Verklebungen vorgenommen wurden. Hierfür wurden 200 g des Schmelzklebstoffs verbraucht.

Während dieser Zeit wurden 31 cm über dem Klebepunkt Luftprobenahmen durchgeführt, jedoch nur während des Klebens, nicht während der Umrüstzeiten. Dadurch ergab sich eine tatsächliche Probennahmedauer von 18 bis 19 Minuten.

### Probenahme, Desorption, Analyse

Die Probenahmen erfolgten als stationäre Messungen, bei denen 1,5 bzw. 1 Liter Luft pro Minute parallel durch Waschflaschen, die mit einer Dibutylaminlösung befüllt waren (DBA-Methode), jeweils mit nachgeschaltetem Glasfaserfilter, gesogen wurden.

Vor jeder neuen Messreihe wurde der Raum intensiv gelüftet.

## Patentansprüche

1. Bei Raumtemperatur feste, mit einem Erweichungspunkt oberhalb von 23°C (Ring und Ball Methode), reaktive Klebstoffzusammensetzung mit einem maximalen Gehalt an monomeren Diisocyanat von weniger als 0,5 Gew.-% enthaltend mindestens ein Umsetzungsprodukt mit freien Isocyanatgruppen aus
- 2,4'-Diphenylmethandiisocyanat mit einem Anteil an 2,4'-Isomeren von mindestens 95 Gew.%, vorzugsweise mindestens 97,5 Gew.%
und
- mindestens einem Polyetherpolyol und/oder Polyalkylendiol mit einem Molekulargewicht unter 1000 und/oder einem kristallinen, teilkristallinen oder glasartig amorphen Polyesterpolyol, und
- zusätzlich einen Gehalt an migrationsfähigen, haftungsverstärkenden Polyisocyanaten mit einem Dampfdruck kleiner als 10⁻⁶ hPa bei 20°C von kleiner als 30 Gew.%, ausgewählt aus Thiophosphor-säure-tris-(p-Isocyanato-Phenylester), Triphenylmethan-4,4',4"-Triisocyanat, isomere trifunktionelle Homologen des Diphenylmethandüsocyanats (MDI), Isocyanato-bis- ((4-Isocyanatophenyl)methyl)-benzol, 2-Isocyanato-4-((3-Isocyanatophenyl)-methyl)-1-((4-Isocyanatophenyl)-methyl)benzol, 4-Isocyanato-1,2-bis{(a-Isocyanatophenyl)methyl)-benzol, 1-Isocyanato-4-((2-Isocyanatophenyl)methyl)-2-((3-Isocyanatophenyl)methyl)benzol, 4-Isocyanato-α-1-(o-Isocyanatophenyl)-α-3(p-Isocyanatophenyl)-m-Xylol, 2-Isocyanato(o-Isocyanatophenyl)-α'(p-Isocyanatophenyl)m-Xylol, 2-Isocyanato-1,3-bis((2-Isocyanatophenyl) methyl)-benzol, 2-Isocyanato-1,4-bis((4-Isocyanatophenyl)methyl)-benzol, Isocyanato-bis((Isocyanatophenyl)methyl)-benzol, 1-Isocyanato-2,4-bis((4-Isocyanatophenyl)-methyl)-benzol, das Biuretisierungsprodukt des Hexamethylendiisocyanates (HDI), das Isocyanuratisierungsprodukt des HDI, die Trimerisierungsprodukte des Isophorondüsocyanats (IPDI), Addukte aus Diisocyanaten und niedermolekularen Diolen und/oder Triolen, sowie Addukte aus aromatischen Diisocyanaten und Triolen.

2. Klebstoffzusammensetzung nach Anspruch 1 **dadurch gekennzeichnet, dass** sie zusätzlich Umsetzungsprodukte aus 2,4'-Diphenylmethandiisocyanat und bei Raumtemperatur flüssigen Polyesterpolyolen und/oder Polyetherpolyolen mit einem Molekulargewicht über 1000 enthält.

3. Reaktive Schmelzklebstoffzusammensetzungen nach Anspruch 1 oder 2 **gekennzeichnet durch** einen maximalen Gehalt an monomerem Diisocyanat weniger als 0,25 Gew.%.

4. Klebstoffzusammensetzung nach einem der Ansprüche 1 bis 3, **dadurch gekennzeichnet, dass** der Gehalt an migrationsfähigen, haftungsverstärkenden Polyisocyanaten kleiner als 10 Gew.% ist.

5. Klebstoffzusammensetzung nach Anspruch 4 **dadurch gekennzeichnet, dass** das migrationsfähige, haftungsverstärkende Polyisocyanat ein Addukt des 2,4'-Diphenylmethandiisocyanates an ein Diol mit einem Molekulargewicht kleiner als 2000 oder an Polyole mit einer Funktionalität kleiner als 3,3 wie z.B. Trimethylolpropan oder Glycerin ist, wobei der Gehalt des Adduktes an monomerem Diisocyanat kleiner als 2 Gew.-%, vorzugsweise kleiner als 1 Gew.% ist.

6. Reaktive Schmelzklebstoffzusammensetzung nach Anspruch 1 bis 3 **dadurch gekennzeichnet, dass** organofunktionelle Alkoxysilane als migrationsfähige, haftungsverstärkende Zusätze verwendet werden.

7. Verfahren zur Herstellung einer Zusammensetzung nach Anspruch 1 bis 3 **dadurch gekennzeichnet, dass** das NCO- zu OH-Verhältnis des eingesetzten 2,4'-Diphenylmethandlisocyanates zur Summe der Polyole 1,1 bis 1,9, vorzugsweise 1,2 bis 1,75 beträgt, wobei die Reaktionstemperatur 160° C, vorzugsweise 130° C, besonders bevorzugt 110°C nicht übersteigt. -

8. Verfahren zur Herstellung einer Zusammensetzung nach Anspruch 1 bis 6 **dadurch gekennzeichnet, dass**
(a) In einem ersten Schritt das Bindemittel nach einem Verfahren gemäß Anspruch 7 hergestellt wird und
(b) anschließend das migrationsfähige, haftungsverstärkende Polyisocyanat zugemischt wird und
(c) ggf. weitere Hilfs- und Zusatzstoffe zugemischt werden.

## Claims

1. A reactive adhesive composition, solid at room temperature with a softening point of above 23°C (ball and ring method), with a maximum content of monomeric diisocyanate of less than 0.5 wt.% containing at least one reaction product with free isocyanate groups prepared from
- 2,4'-diphenylmethane diisocyanate with a proportion of 2,4' isomers of at least 95 wt.%, preferably at least 97.5 wt.% and
- at least one polyether polyol and/or polyalkylene diol with a molecular weight of below 1000 and/or a crystalline, partially crystalline or glassy amorphous polyester polyol, and
- additionally a content of adhesion-promoting polyisocyanates capable of migration with a vapour pressure of less than 10⁻⁶ hPa at 20°C of less than 30 wt.%, selected from thiophosphoric acid tris-(p-isocyanatophenyl) ester, triphenylmethane 4,4',4"-triisocyanate, isomeric trifunctional homologues of diphenylmethane diisocyanate (MDI), isocyanato-bis-((4-isocyanatophenyl)methyl)benzene, 2-isocyanato-4-((3-isocyanatophenyl)-methyl)-1-((4-isocyanatophenyl)methyl)benzene, 4-isocyanato-1,2-bis((4-isocyanatophenyl)methyl)benzene, 1-isocyanato-4-((2-isocyanatophenyl)methyl)-2-((3-isocyanatophenyl)methyl)-benzene, 4-isocyanato-α-1-(o-isocyanatophenyl)-α-3-(p-isocyanatophenyl)-m-xylene, 2-isocyanato-(o-isocyanatophenyl)-α'-(p-isocyanatophenyl)-m-xylene, 2-isocyanato-1,3-bis((2-isocyanatophenyl)methyl)benzene, 2-isocyanato-1,4-bis((4-isocyanatophenyl)methyl)benzene, isocyanato-bis((isocyanatophenyl)methyl)benzene, 1-isocyanato-2,4-bis((4-isocyanatophenyl)methyl)benzene, the biuretisation product of hexamethylene diisocyanate (HDI), the isocyanuratisation product of HDI, the trimerisation product of isophorone diisocyanate (IPDI), addition products prepared from diisocyanates and low molecular weight diols and/or triols, and addition products prepared from aromatic diisocyanates and triols.

2. An adhesive composition according to claim 1, **characterised in that** it additionally contains reaction products prepared from 2,4-diphenylmethane diisocyanate and polyester polyols and/or polyether polyols with a molecular weight of above 1000 which are liquid at room temperature.

3. Reactive hot-melt adhesive compositions according to claim 1 or claim 2, **characterised by** a maximum monomeric diisocyanate content of less than 0.25 wt.%.

4. An adhesive composition according to any one of claims 1 to 3, **characterised in that** the content of adhesion-promoting polyisocyanates capable of migration is less than 10 wt.%.

5. An adhesive composition according to claim 4, **characterised in that** the adhesion-promoting polyisocyanate capable of migration is an addition product of 2,4'-diphenylmethane diisocyanate onto a diol with a molecular weight of less than 2000 or onto polyols with a functionality of less than 3.3, such as for example trimethylolpropane or glycerol, the addition product's content of monomeric diisocyanate being less than 2 wt.%, preferably less than 1 wt.%.

6. A reactive hot-melt adhesive composition according to claims 1 to 3, **characterised in that** organofunctional alkoxysilanes are used as adhesion-promoting additives capable of migration.

7. A method for the production of a composition according to claims 1 to 3, **characterised in that** the NCO to OH ratio of the 2,4'-diphenylmethane diisocyanate used to the sum of polyols amounts to 1.1-1.9, preferably 1.2-1.75, the reaction temperature not exceeding 160°C, preferably not 130°C, particularly preferably not 110°C.

8. A method for the production of a composition according to claims 1 to 6, **characterised in that**
(a) in a first step the binder is produced by a method according to claim 7 and
(b) the adhesion-promoting polyisocyanate capable of migration is then mixed in and
(c) further auxiliary substances and additives are optionally mixed in.

## Revendications

1. Composition de colle réactive, solide à la température ambiante, avec un point de ramollissement au-dessus de 23°C (procédé anneau et bille) ayant une teneur maximale en diisocyanate monomère inférieure à 0,5% en poids, contenant au moins un produit de réaction ayant des groupes isocyanate libres issu
- de diisocyanate de 2,4'-diphénylméthane avec une proportion de 2,4'-isomères d'au moins 95% en poids, de préférence d'au moins 97,5% en poids et
- d'au moins un polyétherpolyol et/ou polyalkylènediol ayant une masse moléculaire inférieure à 1 000 et/ou un polyesterpolyol cristallin, partiellement cristallin ou amorphe vitreux, et
- en outre une teneur en polyisocyanates renforçant l'adhérence, capables de migrer, avec une pression de vapeur inférieure à 10⁻⁶ hPa à 20°C, à raison de moins de 30% en poids, choisis parmi l'ester tris-(p-isocyanato-phénylique) d'acide thiophosphorique, le 4,4',4"-triisocyanate de triphénylméthane, les homologues trifonctionnels isomères du diisocyanate de diphénylméthane (MDI), l'isocyanato-bis-((4-isocyanatophényl)méthyl)-benzène, le 2-isocyanato-4-((3-isocyanatophényl)-méthyl)-1-((4-isocyanato-phényl)-méthyl)benzène, le 4-isocyanato-1,2-bis-((4-isocyanatophényl)-méthyl)benzène, le 1-isocyanato-4-((2-isocyanatophényl)-méthyl)-2-((3-isocyanatophényl)-méthyl)benzène, le 4-isocyanato-α-1-(o-isocyanatophényl)-α-3(p-isocyanatophényl)-m-xylène, le 2-isocyanato(o-isocyanatophényl)-α'(p-isocyanatophényl)-m-xylène, le 2-isocyanato-1,3-bis((2-isocyanatophényl) méthyl)benzène, le 2-isocyanato-1,4-bis((4-isocyanatophényl)méthyl)benzène, l'isocyanato-bis((isocyanatophényl) méthylbenzène, le 1-isocyanato-2,4-bis((4-isocyanatophényl)-méthylbenzène, le produit de biuretisation du diisocyanate de hexaméthylène (HDI), le produit d'isocyanuratisation du HDI, les produits de trimérisation du diisocyanate d'isophorone (IPDI), les adduits de diisocyanates et de diols et/ou triols de faible masse moléculaire, ainsi que les adduits de diisocyanates aromatiques et de triols.

2. Composition de colle selon la revendication 1, **caractérisée en ce qu'**elle contient en outre des produits de réaction issus du diisocyanate de 2,4'-diphénylméthane et de polyesterpolyols et/ou polyétherpolyols liquides à la température ambiante, ayant une masse moléculaire supérieure à 1 000.

3. Compositions de colle fusible réactives selon la revendication 1 ou 2, **caractérisées par** une teneur maximale en diisocyanate monomère, inférieure à 0,25% en poids.

4. Composition de colle selon l'une quelconque des revendications 1 à 3, **caractérisée en ce que** la teneur en polyisocyanates renforçant l'adhérence, capables de migrer, est inférieure à 10% en poids.

5. Composition de colle selon la revendication 4, **caractérisée en ce que** le polyisocyanate renforçant l'adhérence, capable de migrer, est un adduit du diisocyanate de 2,4'-diphénylméthane sur un diol ayant une masse moléculaire inférieure à 2 000 ou sur des polyols ayant une fonctionnalité inférieure à 3,3 comme par exemple le triméthylolpropane ou le glycérol, la teneur de l'adduit en diisocyanate monomère étant inférieure à 2% en poids, de préférence inférieure à 1% en poids.

6. Composition de colle fusible réactive selon les revendications 1 à 3, **caractérisée en ce que** des alcoxysilanes organofonctionnels sont employés en tant qu'additifs renforçant l'adhérence, capables de migrer.

7. Procédé pour préparer une composition selon les revendications 1 à 3, **caractérisé en ce que** le rapport des groupes NCO aux groupes OH du diisocyanate de 2,4'-diphénylméthane mis en oeuvre à la somme des polyols est de 1,1 à 1,9, de préférence de 1,2 à 1,75, la température de réaction ne dépassant pas 160°C, de préférence pas 130°C, de manière particulièrement préférée pas 110°C.

8. Procédé pour préparer une composition selon les revendications 1 à 6, **caractérisé en ce que**
(a) dans une première étape, le liant est préparé d'après un procédé selon la revendication 7 et
(b) ensuite le polyisocyanate renforçant l'adhérence, capable de migrer, est ajouté en mélangeant et
(c) éventuellement d'autre adjuvants et additifs sont ajoutés.
